# EUROPEAN PATENT APPLICATION

(11) **EP 4 789 884 A1**
(43) Date of publication of application: **12.08.2026**
(21) Application number: 26156164.1
(22) Date of filing: 03.02.2026
(51) Int. Cl.: B60K 1/00, B60K 1/04, B60K 5/00, B60K 13/04, B60K 15/03

(54) **VEHICLE**

(30) Priority: 06.02.2025 JP 2025018372; 24.12.2025 JP 2025279923
(71) Applicant: Toyota Jidosha Kabushiki Kaisha, Toyota-shi, Aichi-ken 471-8571 (JP)
(72) Inventor: TSUKASHIMA, Hiroyuki, TOYOTA-SHI, AICHI-KEN, 471-8571 (JP); OKOCHI, Toshinori, TOYOTA-SHI, AICHI-KEN, 471-8571 (JP); GOTO, Kenji, TOYOTA-SHI, AICHI-KEN, 471-8571 (JP); OTSUKA, Akira, TOYOTA-SHI, AICHI-KEN, 471-8571 (JP)
(74) Representative: Cabinet Beau de Loménie

(57) **Abstract**

A battery (17) of a vehicle is located behind an engine (10) and below front seats (15), and is arranged over a center of the vehicle in a lateral direction. The engine includes an exhaust pipe (EP). The exhaust pipe is connected to the engine in front of the battery, extends along a lateral side of the battery, and is configured to discharge exhaust gas out of the vehicle behind the battery. The battery (17) includes a first portion at a side of the center of the vehicle where the exhaust pipe (EP) is located, and a second portion at a side of the center of the vehicle opposite to the side where the exhaust pipe is located. The first portion includes a part having a lateral dimension that is less than a lateral dimension of the second portion.

## Description

### BACKGROUND

### 1. Field

The present disclosure relates to a vehicle.

### 2. Description of Related Art

WO2013/065798A discloses a vehicle including a battery and an engine disposed in front of the battery. An exhaust pipe connected to the engine in front of the battery extends along a lateral side of the battery and discharges exhaust gas out of the rear side of the vehicle.

To balance weight distribution between the left and right sides of the vehicle, there is room for improvement in how to layout devices in the vehicle.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a vehicle includes an engine, a battery, and front seats including a driver's seat and a passenger seat. The engine is arranged in front of the front seats. The battery is located behind the engine and below the front seats, and is arranged over a center of the vehicle in a lateral direction. The engine includes an exhaust pipe. The exhaust pipe is connected to the engine in front of the battery, extends along a lateral side of the battery, and is configured to discharge exhaust gas out of the vehicle behind the battery. The battery includes a first portion at a side of the center of the vehicle where the exhaust pipe is located, and a second portion at a side of the center of the vehicle opposite to the side where the exhaust pipe is located. The first portion includes a part having a lateral dimension that is less than a lateral dimension of the second portion.

Other features and aspects will be apparent from the following detailed description, the drawings, and the claims.

### BRIEF DESCRIPTION OF THE DRAWINGS

Fig. 1 is a plan view schematically illustrating the layout of devices in a hybrid electric vehicle in accordance with an embodiment.
Fig. 2 is a side view schematically illustrating the layout of the devices in the hybrid electric vehicle in Fig. 1.
Fig. 3 is a plan view schematically illustrating the shape of a battery and the layout of devices surrounding the battery in the hybrid electric vehicle in Fig. 1.
Fig. 4 is a perspective view of the battery illustrated in Fig. 1.
Fig. 5 is a plan view schematically illustrating the shape of a battery and the layout of devices surrounding the battery in a hybrid electric vehicle in accordance with a first modification.
Fig. 6 is a plan view schematically illustrating the shape of a battery and the layout of devices surrounding the battery in a hybrid electric vehicle in accordance with a second modification.
Fig. 7 is a plan view schematically illustrating the shape of a battery and the layout of devices surrounding the battery in a hybrid electric vehicle in accordance with a third modification.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

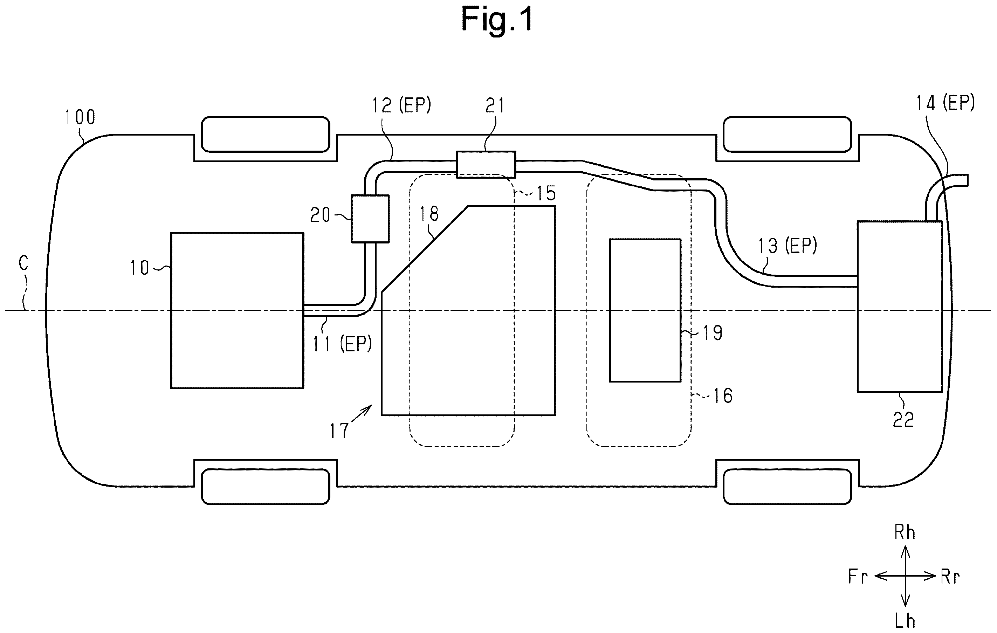

In Figs. 1 to 7, directions are indicated by arrows. In Figs. 1 to 7, "Fr" indicates the front direction of a hybrid electric vehicle 100. In Figs. 1 to 7, "Rr" indicates the rear direction of the hybrid electric vehicle 100. In Figs. 1 and 3 to 7, "Rh" indicates the right side as viewed from the occupant facing the front direction in the hybrid electric vehicle 100. In Figs. 1 and 3 to 7, "Lh" indicates the left side as viewed from the occupant facing the front direction in the hybrid electric vehicle 100.

Further, Figs. 1 and 3 to 7 show a center line C. The center line C indicates the center of the hybrid electric vehicle 100 in the lateral direction.

An embodiment of the hybrid electric vehicle will now be described with reference to Figs. 1 to 4.

### Layout of Battery 17 and Surrounding Devices

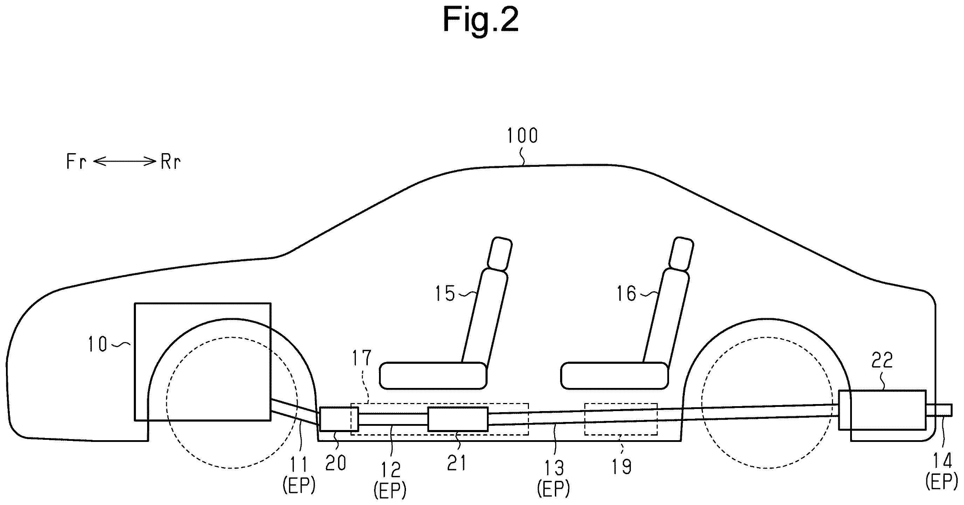

Fig. 1 shows the layout of a battery 17 and devices surrounding the battery 17 in a view of the hybrid electric vehicle 100 taken from above. Fig. 2 shows the layout of the battery 17 and the devices surrounding the battery 17 in a view of the hybrid electric vehicle 100 taken from the left.

As shown in Figs. 1 and 2, the hybrid electric vehicle 100 includes front seats 15. The front seats 15 include a driver's seat and a passenger seat of the hybrid electric vehicle 100.

The hybrid electric vehicle 100 includes a rear seat 16. The rear seat 16 forms a second row of seat behind the front seats 15.

The hybrid electric vehicle 100 includes an engine 10. The engine 10 is arranged in front of the front seats 15.

The hybrid electric vehicle 100 includes a battery 17. The battery 17 is arranged behind the engine 10. As shown in Fig. 1, the battery 17 is arranged over the center line C. As shown in Fig. 2, the battery 17 is arranged below the front seats 15.

As shown in Figs. 1 and 2, the hybrid electric vehicle 100 includes a tank 19. The tank 19 is arranged behind the battery 17. As shown in Fig. 1, the tank 19 is arranged over the center line C. As shown in Fig. 2, the tank 19 is arranged below the rear seat 16. The tank 19 stores fuel for the engine 10.

### Layout of Exhaust Pipe EP

The hybrid electric vehicle 100 includes an exhaust pipe EP for the engine 10. The exhaust pipe EP includes a first exhaust pipe 11, a second exhaust pipe 12, a third exhaust pipe 13, and a fourth exhaust pipe 14.

As shown in Fig. 1, the first exhaust pipe 11 is connected to the engine 10 in front of the battery 17 and extends along the front of the battery 17 to connect with a catalyst 20. Exhaust gas of the engine 10 flows through the first exhaust pipe 11 to the catalyst 20.

The catalyst 20 purifies the exhaust gas. The catalyst 20 is, for example, a three-way catalyst.

As shown in Fig. 1, the second exhaust pipe 12 is connected to the catalyst 20 and extends along the right side of the battery 17 to connect with a first muffler 21. The exhaust gas passing through the catalyst 20 flows through the second exhaust pipe 12 to the first muffler 21.

As shown in Fig. 1, the first muffler 21 is arranged on the right side of the battery 17. The first muffler 21 reduces the noise emitted by the exhaust gas when discharged out of the hybrid electric vehicle 100.

As shown in Fig. 1, the third exhaust pipe 13 is connected to the first muffler 21, at a position on the right side of the battery 17, and extends along the right side of the tank 19. The third exhaust pipe 13 is connected to a second muffler 22, at a position behind the tank 19. The third exhaust pipe 13, behind the tank 19, is arranged to extend from the right side of the tank 19 toward the center line C. The exhaust gas passing through the first muffler 21 flows through the third exhaust pipe 13 to the second muffler 22.

As shown in Figs. 1 and 2, the second muffler 22 is arranged behind the tank 19. In the same manner as the first muffler 21, the second muffler 22 reduces the noise emitted by the exhaust gas when discharged out of the hybrid electric vehicle 100.

As shown in Fig. 1, the fourth exhaust pipe 14 is connected to the second muffler 22 and extends out of the hybrid electric vehicle 100 behind the second muffler 22. The exhaust gas passing through the second muffler 22 flows through the fourth exhaust pipe 14 and is discharged out of the hybrid electric vehicle 100.

In this manner, the exhaust pipe EP, in the hybrid electric vehicle 100, is connected to the engine 10 in front of the battery 17, extends along the lateral side of the battery 17 and the tank 19, and discharges exhaust gas out of the hybrid electric vehicle 100 behind the tank 19. The first muffler 21 is arranged in a part of the exhaust pipe EP that extends along the lateral side of the battery 17.

### Shape of Battery 17

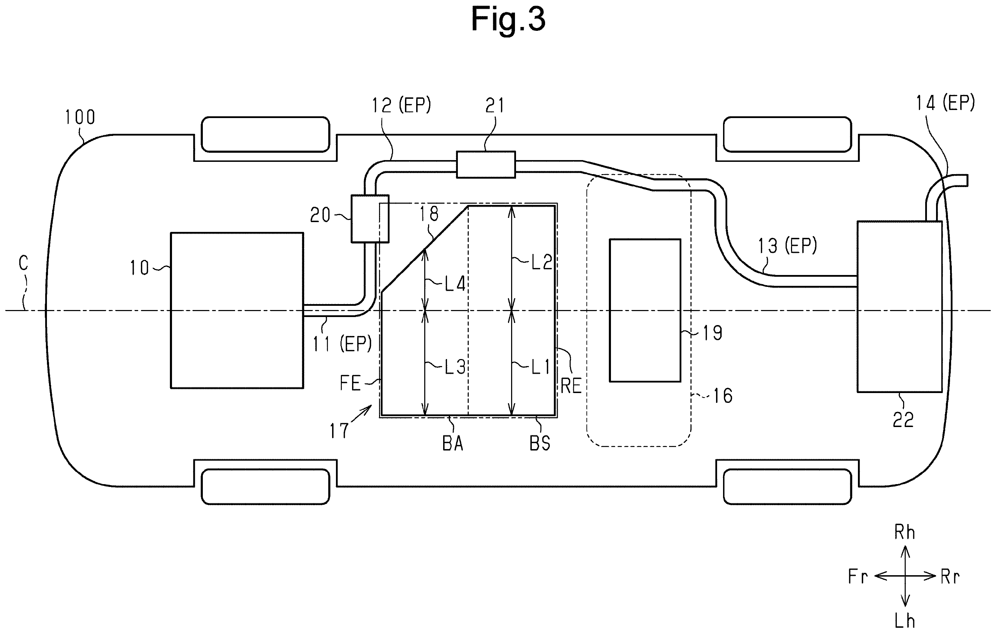

In the same manner as Fig. 1, Fig. 3 shows the layout of the battery 17 and the devices surrounding the battery 17 in a view of the hybrid electric vehicle 100 taken from above. The front-row seats 15 shown in Fig. 1 are omitted from Fig. 3 for illustrative purposes.

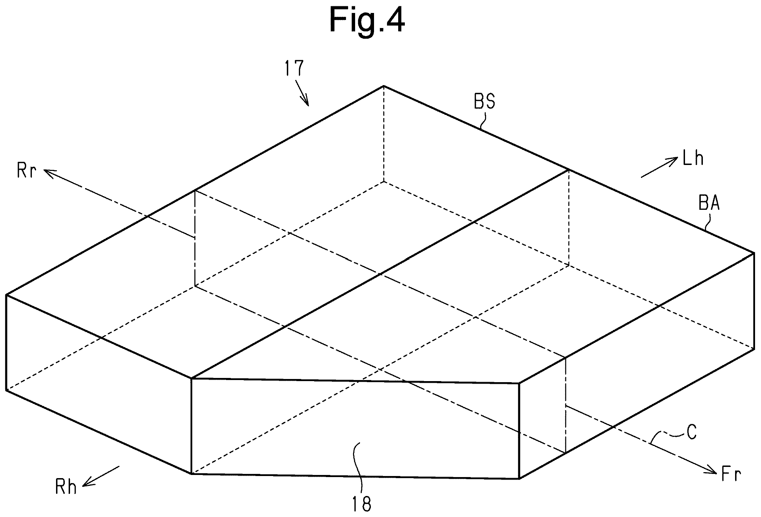

Fig. 4 is a perspective view of the battery 17.

The shape of the battery 17 will now be described with reference to Figs. 3 and 4.

Fig. 3 shows the shape of an imaginary battery in double-dashed lines as viewed from above. In Fig. 3, the imaginary battery is shown overlapping the battery 17.

The imaginary battery is rectangular as viewed from above. The left and right sides of the imaginary battery each have the same dimension as the left side of the battery 17 as viewed from above. The front and rear sides of the imaginary battery each have the same dimension as the rear side of the battery 17 as viewed from above.

In Fig. 3, the left and right sides of the imaginary battery are parallel to the center line C. The front and rear sides of the imaginary battery are perpendicular to the center line C.

The center line C extends through the lateral center of the imaginary battery. In other words, the right and left portions of the imaginary battery at opposite sides of the center line C in the lateral direction have equal dimensions.

Fig. 3 shows a front end FE and a rear end RE of the battery 17. The front end FE of the battery 17 overlaps the front side of the imaginary battery as viewed from above. The rear end RE of the battery 17 overlaps the rear side of the imaginary battery as viewed from above.

As shown in Figs. 3 and 4, the battery 17 includes an inclined surface 18. As shown in Fig. 3, the inclined surface 18 is inclined with respect to the left and right sides of the imaginary battery, which are parallel to the center line C. The inclined surface 18 is inclined so as to approach the center line C toward the front side.

As shown in Figs. 3 and 4, the battery 17 is divided into two portions at opposite sides of the center line C. The two portions include a right portion that is a first portion and a left portion that is a second portion. The inclined surface 18 is formed in the right portion. Thus, as shown in Fig. 3, the lateral dimension of the right portion of the battery 17 gradually decreases toward the front end FE of the battery 17 from a location between the front end FE and the rear end RE of the battery 17.

As shown in Figs. 3 and 4, the battery 17 includes two sections, namely, an asymmetric section BA and a symmetric section BS.

The asymmetric section BA corresponds to the front portion of the battery 17. As shown in Fig. 3, the asymmetric section BA is trapezoidal and has one side formed by the entire inclined surface 18 as viewed from above.

The symmetric section BS corresponds to the rear portion of the battery 17. As shown in Fig. 3, when viewed from above, the symmetric section BS is rectangular and has one side formed by the longest side of the trapezoidal asymmetric section BA.

The symmetric section BS is a section of the battery 17 in which the portions at opposite sides of the center line C are symmetrical and have equal dimensions in the lateral direction.

Fig. 3 shows dimension L1 and dimension L2 of the symmetric section BS. Dimension L1 indicates the lateral dimension of the portion of the symmetric section BS at the left side of the center line C. Dimension L2 indicates the lateral dimension of the portion of the symmetric section BS at the right side of the center line C. Dimension L1 is equal to dimension L2.

The asymmetric section BA is a section of the battery 17 in which portions at opposite side of the center line C are asymmetrical and have unequal dimensions in the lateral direction.

Fig. 3 shows dimension L3 and dimension L4 of the asymmetric section BA. Dimension L3 indicates the lateral dimension of the portion of the asymmetric section BA at the left side of the center line C. Dimension L4 indicates the lateral dimension of the portion of the asymmetric section BA at the right side of the center line C.

As shown in Fig. 3, the portion of the asymmetric section BA at the left side of the center line C completely overlaps the front left portion of the imaginary battery. Thus, the lateral dimension of the portion of the asymmetric section BA at the left side of the center line C corresponds to the lateral dimension of the front left portion of the imaginary battery.

The portion of the asymmetric section BA at the right side of the center line C includes the inclined surface 18 and thus does not completely overlap the front right portion of the imaginary battery. In Fig. 3, one end of dimension L4 is taken on a diagonal line drawn along the inclined surface 18. Thus, dimension L4 is less than the lateral dimension of the front right portion of the imaginary battery. In other words, dimension L4 is less than dimension L3.

The battery 17 differs from the imaginary battery in that the battery 17 has a missing part that forms the inclined surface 18. Thus, the lateral dimension of the portion of the asymmetric section BA at the right side of the center line C is less than the lateral dimension of the front right portion of the imaginary battery. Accordingly, in the asymmetric section BA, the lateral dimension of the right portion is less than the lateral dimension of the left portion at opposite sides of the center line C.

As shown in Fig. 3, the catalyst 20 and the imaginary battery overlap each other in a view of the hybrid electric vehicle 100 taken from above. In contrast, the catalyst 20 and the battery 17 do not overlap each other in a view of the hybrid electric vehicle 100 taken from above.

The rear end of the catalyst 20 is located rearward from the front end FE of the battery 17. As shown in Fig. 3, the catalyst 20 is arranged in front of the inclined surface 18 of the battery 17 so that a part of the catalyst 20 is located rearward from the front end FE of the battery 17.

### Operation of Present Embodiment

The battery 17 and the exhaust pipe EP are heavy components installed in the hybrid electric vehicle 100. The battery 17 is particularly heavy even among the heavy components installed in the hybrid electric vehicle 100. Thus, in order to balance weight distribution between the left and right sides of the hybrid electric vehicle 100, it is preferable that the battery 17 be arranged over the center of the hybrid electric vehicle 100 in the lateral direction. However, in this case, the arrangement of the exhaust pipe EP along a lateral side of the battery 17, will concentrate weight toward one side of the hybrid electric vehicle 100. This will adversely affect the weight balance between the left and right sides of the hybrid electric vehicle 100.

In the present embodiment, the battery 17 is divided into two portions at opposite sides of the center of the hybrid electric vehicle 100 in the lateral direction. The dimension of the portion of the battery 17 at the side where the exhaust pipe EP is arranged is shorter than that of the other portion. This reduces the weight of the battery 17 at the side where the exhaust pipe EP is arranged.

### Advantages of Present Embodiment

(1) Weight is distributed in a relatively even manner between the left and right sides of the hybrid electric vehicle 100 even though the exhaust pipe EP extends along a lateral side of the battery 17.
(2) In the hybrid electric vehicle 100, the battery 17 includes the symmetric section BS and the asymmetric section BA. In the symmetric section BS, the portions at opposite sides of the center of the hybrid electric vehicle 100 in the lateral direction are symmetrical and equal in lateral dimension. In the asymmetric section BA, the lateral dimension of the portion at the side of the center of the hybrid electric vehicle 100 where the exhaust pipe EP is arranged is less than the lateral dimension of the portion at the side of the center of the hybrid electric vehicle 100 where the exhaust pipe EP is not arranged.

In the hybrid electric vehicle 100, the battery 17 includes the symmetric section BS, which is symmetrical about the center line C in the lateral direction. Accordingly, weight is distributed in a relatively even manner between the left and right sides of the hybrid electric vehicle 100.

(3) The hybrid electric vehicle 100 includes the catalyst 20, which is arranged in the exhaust pipe EP and purifies the exhaust gas. When the battery 17 is divided into two portions at opposite sides of the center of the hybrid electric vehicle 100 in the lateral direction, the side closer to the exhaust pipe EP is referred to as a first portion. The first portion includes the inclined surface 18, which approaches the center of the battery 17 toward the front so that the lateral dimension of the battery 17 gradually decreases from a location between the front end FE and the rear end RE of the battery 17. The catalyst 20 is arranged in front of the inclined surface 18 so that at least a part of the catalyst 20 is located rearward from the front end FE of the battery 17.

The arrangement of the catalyst 20 in front of the inclined surface 18 allows the battery 17 and the catalyst 20 to be installed within a narrow area without causing interference between the catalyst 20 and the battery 17. Further, the arrangement of the catalyst 20 in front of the inclined surface 18 allows weight to be distributed in a relatively even manner between the left and right sides of the hybrid electric vehicle 100, even if the catalyst 20 is arranged in the exhaust pipe EP, which extends along the lateral side of the battery 17.

(4) The hybrid electric vehicle 100 includes the rear seat 16 and the tank 19. The rear seat 16 is arranged behind the front seats 15. The tank 19 stores fuel for the engine 10. The tank 19 is arranged below the rear seat 16.

In the present embodiment, the arrangement of the battery 17 below the front seats 15 provides open space for the tank 19 below the rear seat 16. This allows the hybrid electric vehicle 100 to mount the tank 19 that has a large volume.

(5) The hybrid electric vehicle 100 includes the first muffler 21, which reduces noise emitted when the exhaust gas is discharged out of the hybrid electric vehicle 100. The first muffler 21 is arranged in the exhaust pipe EP at a part extending along a lateral side of the battery 17.

The hybrid electric vehicle 100 includes the first muffler 21, which extends along a lateral side of the battery 17. Thus, in a side collision of the hybrid electric vehicle 100, an impact is applied to the first muffler 21 before the battery 17. Accordingly, the hybrid electric vehicle 100 reduces the impact applied to the battery 17 in a side collision.

### Modifications

The above embodiment may be modified as follows. The above-described embodiment and the following modifications can be combined as long as the combined modifications remain technically consistent with each other.

In the above-described embodiment, the exhaust pipe EP extends along the right side of the battery 17. However, the exhaust pipe EP may extend along the left side of the battery 17. In this case, the battery 17 includes the inclined surface 18 on the left side of the center line C.

In the above-described embodiment, the battery 17 includes the symmetric section BS and the asymmetric section BA. However, the battery 17 does not need to include the symmetric section BS. For example, the entire battery 17 may shape to be asymmetrical about the center line C. The battery 17 may be arranged over the center line C so that a large portion of the battery 17 is arranged at the side of the center line C opposite to the side where the exhaust pipe EP is arranged.

In the above-described embodiment, the tank 19 is arranged below the rear seat 16. However, the tank 19 does not need to be arranged below the rear seat 16.

In the above-described embodiment, the tank 19 is arranged over the center line C. However, the tank 19 does not need to be arranged over the center line C.

In the above-described embodiment, the exhaust pipe EP extends along the same lateral side of the battery 17 and the tank 19. However, the exhaust pipe EP does not need to extend along the same lateral side of the battery 17 and the tank 19. For example, the exhaust pipe EP may extend along the right side of the battery 17 and along the left side of the tank 19. Alternatively, the exhaust pipe EP may extend along the left side of the battery 17 and along the right side of the tank 19.

In the above-described embodiment, the catalyst 20 is arranged in front of the inclined surface 18 so that at least a part of the catalyst 20 is located rearward from the front end FE of the battery 17. However, the location of the catalyst 20 in the hybrid electric vehicle 100 is not limited to the above-described embodiment. The hybrid electric vehicle 100 may be arranged so that the entire catalyst 20 is located in front of the front end FE of the battery 17. The catalyst 20 does not need to be arranged in front of the inclined surface 18.

In the above-described embodiment, the first muffler 21 is arranged in the exhaust pipe EP at a part extending along a lateral side of the battery 17. However, the first muffler 21 does not need to be arranged in the exhaust pipe EP at a part extending along a lateral side of the battery 17.

In the hybrid electric vehicle 100, the positional relationship between the battery 17 and the catalyst 20 is not limited to that described in the above embodiment.

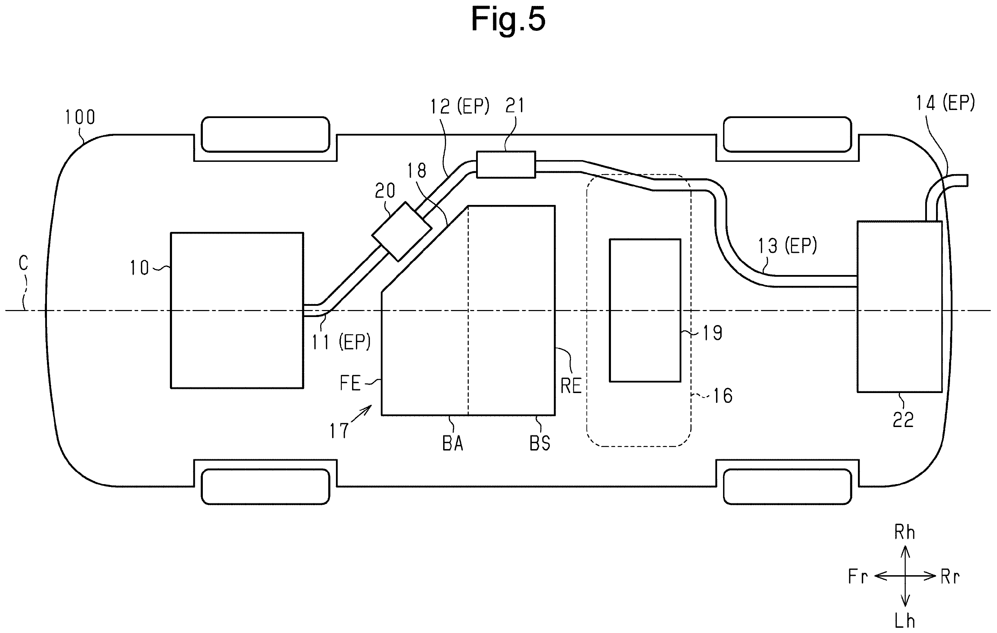

Fig. 5 shows the layout of the devices in a first modification of the hybrid electric vehicle 100 as viewed from above. In the same manner as Fig. 3, the front seats 15 are omitted from Fig. 5 for illustrative purpose. In the hybrid electric vehicle 100 of the first modification, the front seats 15 are arranged at the same locations as the above-described embodiment.

As shown in Fig. 5, in the hybrid electric vehicle 100 of the first modification, the catalyst 20 is arranged in the exhaust pipe EP in a part that extends along the inclined surface 18. Accordingly, the first modification shortens the dimension of the exhaust pipe EP.

As shown in Fig. 5, the first modification of the hybrid electric vehicle 100 includes the rear seat 16 and the tank 19. The rear seat 16 is arranged behind the front seats 15. The tank 19 stores fuel for the engine 10. The tank 19 is arranged below the rear seat 16. The tank 19 is arranged over the center of the hybrid electric vehicle 100 in the lateral direction. The exhaust pipe EP extends along lateral sides of the tank 19 and the battery 17. The exhaust pipe EP discharges exhaust gas out of the hybrid electric vehicle 100 behind the tank 19.

If the inclined surface 18 of the battery 17 were to extend from a position between the front end FE and the rear end RE of the battery 17 to the rear end RE of the battery 17, and the exhaust pipe EP were to be arranged along the inclined surface 18, the exhaust pipe EP may interfere with the tank 19. In contrast, in the hybrid electric vehicle 100 of the first modification, the inclined surface 18 of the battery 17 extends from a position between the front end FE and the rear end RE of the battery 17 to the front end FE of the battery 17. Thus, in the first modification, the dimension of the exhaust pipe EP is shortened while avoiding interference between the exhaust pipe EP and the tank 19.

In the above-described embodiment, the inclined surface 18 is inclined to approach the center line C toward the front. The inclined surface 18 of the battery 17 in the hybrid electric vehicle 100 does not have to be shaped as described in the above embodiment.

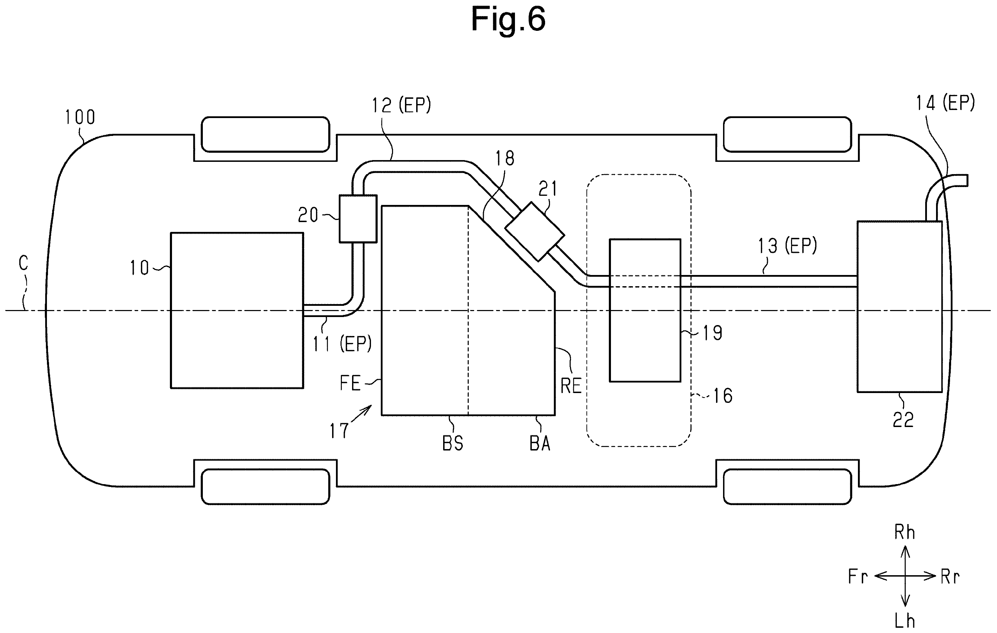

Fig. 6 shows the layout of the devices in a second modification of the hybrid electric vehicle 100 as viewed from above. In the same manner as Fig. 3, the front seats 15 are omitted from Fig. 6 for illustrative purpose. In the hybrid electric vehicle 100 of the second modification, the front seats 15 are arranged at the same locations as the above-described embodiments.

As shown in Fig. 6, in the second modification of the hybrid electric vehicle 100, the inclined surface 18 of the battery 17 is inclined to approach the center line C toward the rear. When the battery 17 is divided into two portions at opposite sides of the center line C, the dimension of the right portion gradually decreases from a location between the front end FE and the rear end RE of the battery 17 toward the rear end RE of the battery 17.

In this manner, in the second modification of the hybrid electric vehicle 100, the rear side of the battery 17 includes the inclined surface 18. Thus, as shown in Fig. 6, the front side of the battery 17 corresponds to the symmetric section BS. The rear side of the battery 17 corresponds to the asymmetric section BA.

As shown in Fig. 6, the second exhaust pipe 12, the first muffler 21, and the third exhaust pipe 13 are arranged along the inclined surface 18. In a view of the hybrid electric vehicle 100 taken from above, the third exhaust pipe 13 overlaps the tank 19. In the hybrid electric vehicle 100 of the second modification, for example, the third exhaust pipe 13 extends below the tank 19. Alternatively, a tunnel portion may be formed in the tank 19, and the third exhaust pipe 13 may extend through the tunnel portion.

In the same manner as the above-described embodiment, in the second modification of the hybrid electric vehicle 100, the battery 17 includes the symmetric section BS and the asymmetric section BA. This distributes weight in a relatively even manner between the left and right sides.

In the same manner as the first modification of the hybrid electric vehicle 100, the exhaust pipe EP is arranged along the inclined surface 18. Therefore, the dimension of the exhaust pipe EP is less than that in a case where the exhaust pipe EP is not arranged along the inclined surface 18.

The shape of the battery 17 included in the hybrid electric vehicle 100 is not limited to that described in the above embodiments.

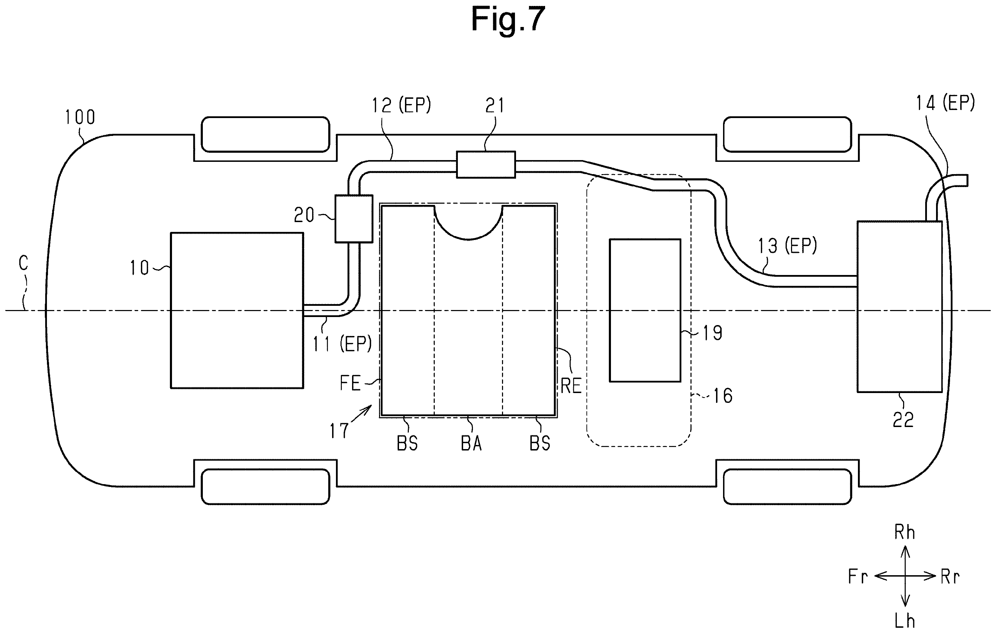

Fig. 7 shows the layout of the devices in a third modification of the hybrid electric vehicle 100 taken from above. In the same manner as Fig. 3, the front seats 15 are omitted from Fig. 7 for illustrative purpose. In the hybrid electric vehicle 100 of the third modification, the front seats 15 are arranged at the same locations as the above-described embodiments.

In the same manner as Fig. 3, the double-dashed lines in Fig. 7 show the shape of the imaginary battery as viewed from above. In Fig. 7, the imaginary battery is shown overlapping the battery 17 of the hybrid electric vehicle 100 in the third modification.

The imaginary battery is rectangular as viewed from above. The left and right sides of the imaginary battery each have the same dimension as the left side of the battery 17 as viewed from above. The front and rear sides of the imaginary battery each have the same dimension as the corresponding sides of the battery 17 as viewed from above.

In Fig. 7, the left and right sides of the imaginary battery are parallel to the center line C. The front and rear sides of the imaginary battery are perpendicular to the center line C.

In Fig. 7, the center line C extends through the center of the imaginary battery in the lateral direction. In other words, the portions of the imaginary battery at opposite sides of the center line C have equal dimensions.

In comparison with the imaginary battery, the battery 17 of the hybrid electric vehicle 100 in the third modification is shaped to include a recess in the portion at the right side of the center line C.

As shown in Fig. 7, the battery 17 includes two symmetric sections BS and one asymmetric section BA. The asymmetric section BA is located between the front symmetric section BS and the rear symmetric section BS.

The portions of the front symmetric section BS at opposites sides of the center line C of the battery 17 are symmetrical and equal in lateral dimension. The portions of the rear symmetric section BS at opposite sides of the center line C of the battery 17 are symmetrical and equal in lateral dimension.

As shown in Fig. 7, the portion of the asymmetric section BA at the left side of the center line C completely overlaps the left portion of the imaginary battery in the part corresponding to the part between the two symmetric sections BS of the battery 17. Thus, the left portion of the asymmetric section BA has the same lateral dimension as the left portion of the imaginary battery in the part corresponding to part between the two symmetric sections BS of the battery 17.

In contrast, the portion of the asymmetric section BA at the right side of the center line C includes the recess. Thus, the right portion of a section in the part of the imaginary battery corresponding to the part of the battery 17 between the two symmetric sections BS does not completely overlap the right portion of the asymmetric section BA. Further, the battery 17 differs from the imaginary battery in that it includes a missing part forming the recess of the asymmetric section BA. Thus, the lateral dimension of the right portion of the asymmetric section BA is less than the lateral dimension of the right portion of the section in the part of the imaginary battery corresponding to the part of the battery 17 between the two symmetric sections BS. Accordingly, the lateral dimension of the right portion in the asymmetric section BA is less than the lateral dimension of the left portion in the asymmetric section BA.

In this manner, the asymmetric section BA does not need to be shaped to include the front end FE or the rear end RE of the battery 17. The battery 17 may include multiple symmetric sections BS. The battery 17 may include multiple asymmetric sections BA.

In the present disclosure, the hybrid vehicle 100 is exemplified, but the vehicle of the present disclosure is not limited to the hybrid vehicle 100. The vehicle may include an engine and a battery that supplies electric power to a traction motor. In this case, the engine can function as a vehicle traveling drive source and /or a power generation drive source. The electric power generated using the engine can be used to charge the battery and / or to drive the traction motor. For example, the vehicle may be a range extender electric vehicle (REEV) in which the engine is used only as a power generation driving source and is not used as a vehicle traveling driving source.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A vehicle (100) comprising:
an engine (10);
a battery (17); and
front seats (15) including a driver's seat and a passenger seat, wherein
the engine (10) is arranged in front of the front seats (15),
the battery (17) is located behind the engine (10) and below the front seats (15), and is arranged over a center of the vehicle (100) in a lateral direction,
the engine (10) includes an exhaust pipe (EP),
the exhaust pipe (EP) is connected to the engine (10) in front of the battery (17), extends along a lateral side of the battery (17), and is configured to discharge exhaust gas out of the vehicle (100) behind the battery (17),
the battery (17) includes a first portion at a side of the center of the vehicle (100) where the exhaust pipe (EP) is located, and a second portion at a side of the center of the vehicle (100) opposite to the side where the exhaust pipe (EP) is located, and
the first portion includes a part having a lateral dimension that is less than a lateral dimension of the second portion.

2. The vehicle (100) according to claim 1, wherein:
the battery (17) includes
a symmetric section (BS) in which portions at opposite sides of the center of the vehicle (100) in the lateral direction are symmetrical and have equal dimensions, and
an asymmetric section (BA) in which portions at opposite sides of the center of the vehicle (100) in the lateral direction are asymmetrical and have unequal dimensions; and
a lateral dimension of the first portion in the asymmetric section (BA) is less than a lateral dimension of the second portion in the asymmetric section (BS).

3. The vehicle (100) according to claim 1 or 2, further comprising:
a catalyst (20) arranged in the exhaust pipe (EP) and configured to purify exhaust gas, wherein
the first portion of the battery (17) includes an inclined surface (18) that approaches the center of the vehicle (100) toward a front end (FE) of the battery (17) so that the lateral dimension gradually decreases toward the front end (FE) of the battery (17) from a location between the front end (FE) and a rear end (RE) of the battery (17), and
the catalyst (20) is arranged in front of the inclined surface (18) so that at least a part of the catalyst (20) is located rearward from the front end (FE) of the battery (17).

4. The vehicle (100) according to claim 3, wherein a section of the exhaust pipe (EP) that includes the catalyst (20) is arranged along the inclined surface (18).

5. The vehicle (100) according to claim 4, further comprising:
a rear seat (16) arranged behind the front seats (15); and
a tank (19) configured to store fuel for the engine (10), wherein
the tank (19) is arranged below the rear seat (16) and is arranged over the center of the vehicle (100) in the lateral direction,
the exhaust pipe (EP) is arranged along a lateral side of the tank (19) at a side of the center of the vehicle (100) where the first portion of the battery is located, and
the exhaust pipe (EP) is configured to discharge exhaust gas out of the vehicle (100) behind the tank (19).

6. The vehicle (100) according to any one of claims 1 to 5, further comprising:
a rear seat (16) arranged behind the front seats (15); and
a tank (19) configured to store fuel for the engine (10),
wherein the tank (19) is arranged below the rear seat (16).

7. The vehicle (100) according to any one of claims 1 to 6, further comprising:
a muffler (21, 22) configured to reduce noise emitted when exhaust gas is discharged out of the vehicle (100);
wherein the muffler (21, 22) is arranged in the exhaust pipe (EP) at a part that extends along a lateral side of the battery (17).
